# DEMANDE DE BREVET EUROPEEN

(11) **EP 2 251 760 A1**
(43) Date de publication de la demande: **17.11.2010**
(21) Numéro de dépôt: 10305370.8
(22) Date de dépôt: 09.04.2010
(51) Int. Cl.: G05D 11/13

(54) **Procédé pour contrôler la concentration d'une substance dans un liquide de traitement et installation mettant en oeuvre ce procédé**

(30) Priorité: 09.04.2009 FR 0901762
(71) Demandeur: France Agro Industries, 44860 Saint-Aignan de Grand Lieu (FR)
(72) Inventeur: Besnardeau, Guy, 44860, SAINT-AIGNAN DE GRAND LIEU (FR)
(74) Mandataire: Michelet, Alain

(57) **Abrégé**

Le procédé conforme à l'invention, pour contrôler la concentration d'une substance dans un liquide de traitement (5), dans le cadre d'une installation (1) de traitement de produits (3) par ledit liquide circulant en boucle, c'est-à-dire réutilisé après avoir été appliqué auxdits produits, et qui s'appauvrit en ladite substance au fur et à mesure de son passage sur lesdits produits, est caractérisé par le fait qu'il consiste :
- à détecter automatiquement, en continu ou à intervalles de temps réguliers, la valeur d'un paramètre représentatif de la concentration de ladite substance dans ledit liquide,
- à réaliser une comparaison automatique entre ladite valeur détectée et une valeur seuil prédéterminée, et
- dans le cas où ladite valeur détectée est inférieure à ladite valeur seuil, à apporter automatiquement un complément de ladite substance dans ledit liquide.

Application possible au traitement de produits de la mer type crevettes ou langoustines par une solution de chlorure de sodium.

## Description

La présente invention concerne un procédé pour contrôler la concentration d'une substance dans un liquide de traitement, en particulier pour une installation de traitement de produits par ledit liquide circulant en boucle et dans laquelle ledit liquide s'appauvrit en ladite substance, au fur et à mesure de son passage sur les produits. Elle concerne également une installation pour la mise en oeuvre de ce procédé, en particulier, mais non exclusivement, pour soumettre à un produit de la mer type crevette ou langoustine, une saumure (solution de chlorure de sodium - N_{A}CI) de refroidissement ou de congélation.

Après capture des crevettes, il est courant de leur faire subir une opération de refroidissement ou de congélation, sur des chaînes industrielles, par des moyens d'application d'une solution de chlorure de sodium (communément appelée « saumure »). Pour cela, les produits à traiter peuvent être placés sur un tapis convoyeur du type ajouré (par exemple un tapis à mailles métalliques), surmonté par un contenant d'aspersion (comme décrit dans le document EP-1 622 461).

Dans ces installations, le liquide de traitement récupéré est recyclé vers le contenant d'aspersion au moyen d'un système de pompage approprié, pour obtenir un flux circulant en boucle.

Cependant, comme un peu de chlorure de sodium se dépose à la surface des produits traités, la concentration en cette substance diminue progressivement dans le liquide de traitement circulant en boucle.

Ainsi, comme la qualité du traitement des crevettes nécessite la mise en oeuvre d'une saumure ayant une concentration relativement précise en chlorure de sodium, il est prévu un apport de chlorure de sodium dans le liquide circulant en boucle, adapté au mieux pour conserver ladite concentration recherchée.

Cependant, ces opérations de réglage de concentration sont réalisées manuellement, soit exclusivement en fonction de l'expérience de l'opérateur, soit à partir d'analyses de concentration réalisées régulièrement, ce qui est source d'erreur possible et coûteux en main d'oeuvre.

La présente invention propose une solution pour remédier à ces inconvénients.

Ainsi, le procédé conforme à l'invention pour contrôler la concentration d'une substance dans un liquide de traitement, dans le cadre d'une installation de traitement de produits par ledit liquide circulant en boucle, c'est-à-dire réutilisé après avoir été appliqué auxdits produits et qui s'appauvrit en ladite substance au fur et à mesure de son passage sur lesdits produits, est caractérisé par le fait qu'il consiste :
- à détecter automatiquement, en continu ou à intervalles de temps réguliers, la valeur d'un paramètre représentatif de la concentration de ladite substance dans ledit liquide,
- à réaliser une comparaison automatique entre ladite valeur détectée et une valeur seuil prédéterminée, et
- dans le cas où ladite valeur détectée est inférieure à ladite valeur seuil, à apporter automatiquement un complément de ladite substance dans ledit liquide.

Un tel procédé s'applique avantageusement au traitement de crevettes ou de langoustines par une solution de chlorure de sodium (en particulier pour leur refroidissement ou pour leur congélation). Cependant, il peut aussi s'appliquer au traitement d'autres produits, que ce soit par une solution de chlorure de sodium ou d'autres substances.

Lorsque la concentration de ladite substance dans le liquide est proportionnelle à la densité dudit liquide circulant en boucle, le procédé selon l'invention consiste avantageusement à détecter le poids d'un volume dudit liquide, et à comparer ce poids par rapport à un poids seuil, pour réaliser ou non l'apport complémentaire de ladite substance.

Si la densité du liquide de traitement est dépendante de sa température, on assure de préférence une mise à température déterminée dudit liquide, avant d'en détecter le poids d'un volume, afin de fiabiliser les mesures.

Selon une autre particularité, le procédé consiste à réaliser une dérivation parallèle d'une partie du flux de liquide circulant en boucle, puis à réaliser éventuellement la mise à température déterminée du liquide passant dans ladite dérivation parallèle, avant de détecter le poids d'un de ses volumes sur ladite dérivation parallèle, ladite détection étant réalisée par pesée en continu d'un contenant alimenté en continu par ledit liquide et muni d'une évacuation continue.

Selon encore une autre particularité, l'apport complémentaire en substance dans le liquide de traitement s'effectue, en cas de besoin, en faisant transiter au moins une partie du flux de liquide circulant en boucle, au travers d'un contenant intégrant ladite substance sous forme solide, ledit liquide se chargeant en ladite substance par simple contact et dissolution de celle-ci.

L'invention concerne également l'installation de traitement de produits par un liquide circulant en boucle et qui contient une substance dont la concentration dans ledit liquide diminue au fur et à mesure de son passage sur lesdits produits, pour la mise en oeuvre du procédé décrit ci-dessus, cette installation étant caractérisée par le fait qu'elle comprend :
- des moyens pour détecter automatiquement, en continu ou à intervalles de temps réguliers, la valeur d'un paramètre représentatif de la concentration de ladite substance dans ledit liquide de traitement,
- des moyens pour réaliser une comparaison automatique entre ladite valeur détectée et une valeur seuil prédéterminée, et
- des moyens agencés pour assurer l'apport automatique d'un complément de ladite substance dans ledit liquide, lorsque ladite valeur détectée est inférieure à ladite valeur seuil.

Selon une forme de réalisation préférée, l'installation correspondante comporte un convoyeur sans fin, du type ajouré, dont le brin supérieur constitue le plan de transport des produits, au-dessus duquel est prévu au moins un dispositif pour asperger sur lesdits produits, ledit liquide de traitement, et au-dessous duquel est prévu au moins un contenant pour récupérer par gravité ledit liquide de traitement auquel ont été soumis lesdits produits et qui a traversé ledit convoyeur sans fin ; cette installation comporte encore des moyens pour recycler ledit liquide de traitement, depuis ledit contenant de récupération vers ledit dispositif d'aspersion.

Selon encore une forme de réalisation préférée, le paramètre choisi représentatif de la concentration de ladite substance dans ledit liquide de traitement est la densité dudit liquide de traitement, ladite installation comportant alors :
- des moyens pour détecter le poids d'un volume dudit liquide de traitement, et
- des moyens pour comparer ce poids par rapport à un poids seuil, pour réaliser ou non l'apport complémentaire de ladite substance.

De préférence, l'installation comporte des moyens pour mettre à une température déterminée le liquide dont on veut détecter le poids d'un volume (pour que le poids détecté soit en permanence représentatif de la concentration en substance).

Dans ce cadre, les moyens pour détecter le poids d'un volume du liquide de traitement comprennent avantageusement une dérivation parallèle du circuit en boucle de liquide de traitement, sur laquelle dérivation sont ménagés :
- éventuellement des moyens pour chauffer ledit liquide dérivé à une température déterminée,
- des moyens pour peser un volume dudit liquide,
- des moyens pour comparer le poids dudit volume de liquide avec une valeur seuil prédéterminée, et
- des moyens pour gérer la mise en oeuvre des moyens assurant l'apport automatique d'un complément de ladite substance dans ledit liquide, en fonction des résultats obtenus par lesdits moyens de comparaison.

Selon une autre particularité, les moyens pour peser un volume du liquide de traitement consistent en un capteur de poids installé sous un contenant alimenté en continu par ledit liquide et muni d'une évacuation continue.

Les moyens pour assurer l'apport automatique d'un complément de ladite substance dans ledit liquide consistent avantageusement en une dérivation parallèle du circuit en boucle de liquide, laquelle dérivation transite au travers d'un contenant intégrant ladite substance sous forme solide, l'entrée de ladite dérivation étant équipée d'un sélecteur, manoeuvré par lesdits moyens de gestion, lequel sélecteur peut occuper au moins deux positions : - une première position dans laquelle il empêche le liquide de passer par ladite dérivation, et - une seconde position dans laquelle il autorise au moins une partie du liquide à passer dans ladite dérivation.

Le sélecteur est avantageusement un sélecteur à deux positions, du type tout ou rien, apte à faire transiter, ou non, la totalité du flux de liquide circulant en boucle par ladite dérivation parallèle.

L'invention sera encore illustrée, sans être aucunement limitée, par la description suivante d'une forme de réalisation particulière, donnée uniquement à titre d'exemple et représentée sur les dessins annexés dans lesquels :
- la figure 1 est une vue schématique d'une installation conforme à l'invention illustrant la position « inactive » des moyens d'apport en complément de substance ;
- la figure 2 est une vue partielle de la même installation, avec les moyens d'apport en complément de substance placés en position « active ».

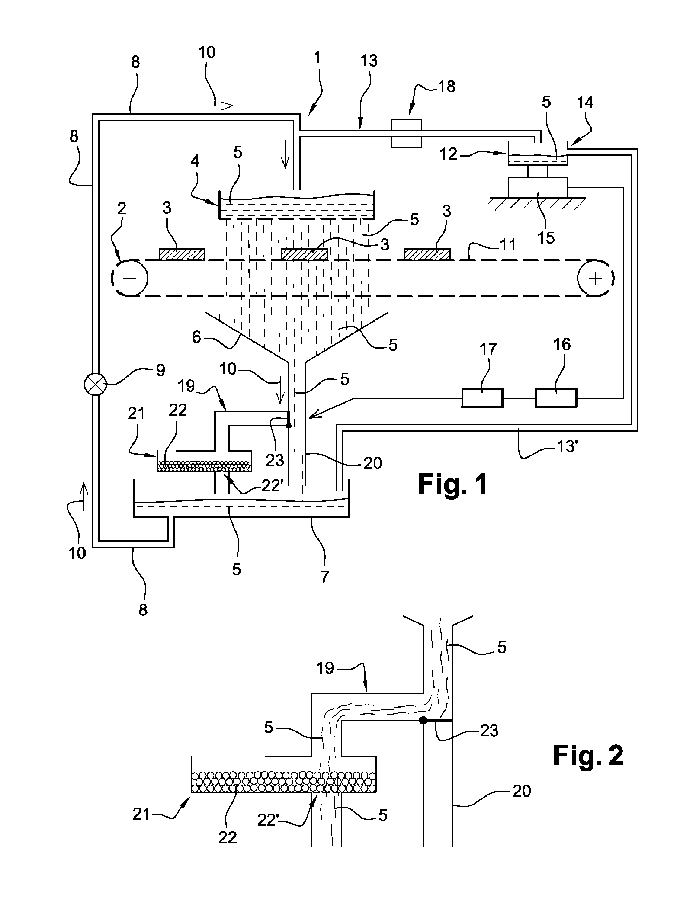

L'installation 1, représentée schématiquement sur la figure 1, comprend un convoyeur sans fin 2, du type ajouré, pour le transfert des produits 3 que l'on souhaite traiter, au-dessus duquel est ménagé un dispositif 4 d'aspersion en liquide de traitement 5 (par exemple du type de celui décrit dans le document EP-1 622 461), et au-dessous duquel on trouve un collecteur 6 et un contenant 7 de récupération dudit liquide de traitement 5.

Une tuyauterie adaptée 8, associée à des moyens de pompage 9, assure le recyclage du liquide 5 récupéré dans le contenant 7, vers le dispositif d'aspersion 4. Le flux de liquide 5 circule en boucle dans le sens des flèches repérées 10 ; il agit sur les produits 3 par simple contact avant d'être récupéré par le collecteur 6.

Le convoyeur sans fin 2 comporte un tapis 11 du type à mailles ou à barrettes, lui conférant une structure ajourée, c'est-à-dire permettant au liquide 5 de le traverser après traitement des produits 3. Le brin supérieur du tapis sans fin 11 sert de plan de transport pour les produits 3.

Le liquide de traitement 5 est par exemple ici une solution de chlorure de sodium (encore appelé communément « saumure ») adaptée pour refroidir ou congeler des produits 3 du type crevettes (schématisés ici sous la forme de pavés).

Pour cela, la saumure 5 comporte du chlorure de sodium (NaCl) à une concentration voisine de 22,4 kg de NaCl par 100 kg de solution, et sa température peut être de l'ordre de - 18°C.

L'installation comporte des moyens échangeurs de calories, non représentés, pour maintenir la saumure à cette température négative.

Comme le liquide de traitement 5 s'appauvrit progressivement en chlorure de sodium au fur et à mesure de son passage sur les produits 3 (du chlorure de sodium se dépose et se maintien en surface des produits), l'installation 1 comprend des moyens pour réguler automatiquement la concentration du liquide 5 en NaCl (apport de NaCl complémentaire, en fonction des besoins).

Pour cela, on utilise la densité du liquide 5 comme paramètre représentatif de ladite concentration de chlorure de sodium.

L'installation 1 comprend à cet effet :
- des moyens pour détecter le poids d'un volume de liquide 5,
- des moyens pour comparer ce poids détecté par rapport à un poids seuil déterminé à l'avance, et
- en fonction du résultat comparatif obtenu, des moyens pour assurer un apport automatique d'un complément de chlorure de sodium dans ledit liquide 5.

Les moyens pour détecter le poids d'un volume de liquide 5 comprennent un contenant 12 alimenté en liquide 5 par une dérivation parallèle 13 provenant du flux général de liquide circulant en boucle. La dérivation parallèle 13 alimente le contenant 12 en continu et le liquide traitement dérivé 5 s'écoule du contenant 12 par une évacuation continue en forme d'orifice de trop plein 14, pour être redirigé dans le circuit principal, par exemple dans le contenant de récupération 7 (ici par la tuyauterie 13' de la dérivation 13). Le contenant 12 cloisonne ainsi en permanence un volume constant de liquide 5 qui est pesé par un capteur de poids 15 (par exemple un capteur électronique transmetteur de poids) ; l'information est transmise à des moyens 16 chargés de comparer le poids détecté par rapport à un poids seuil prédéfini, associés à des moyens de gestion 17, chargés de commander ou non l'apport en complément de chlorure de sodium.

A noter sur la dérivation parallèle 13, en amont du contenant 12, la présence de moyens 18 adaptés pour réchauffer le liquide 5 à une température constante, par exemple voisine de + 15°C pour fiabiliser la mesure.

Les moyens pour assurer l'apport en chlorure de sodium comprennent une dérivation parallèle 19 ménagée sur la canalisation générale 20 apportant le liquide 5 du collecteur 6 au contenant de récupération 7.

La dérivation parallèle 19 transite au sein d'un contenant 21 intégrant du chlorure de sodium sous forme solide 22 (en poudre ou en grains), avant d'être réorientée vers le contenant de récupération 7.

A l'entrée de la dérivation 19, on trouve un sélecteur 23 en forme de volet pivotant permettant, ici, soit d'obturer ladite dérivation 19 pour empêcher le liquide de traitement 5 provenant du collecteur 6 de transiter par le contenant 21 (figure 1), soit d'obturer la canalisation 20 pour forcer le liquide provenant du collecteur 6 à transiter par le contenant 21 (figure 2).

Le sélecteur 23 est commandé par les moyens de gestion 17, ceci par tout moyen approprié (par exemple par l'intermédiaire d'un actionneur électrique).

Lorsque le poids du volume de liquide dans le contenant 12 est considéré comme correct, c'est-à-dire considéré comme représentatif d'une bonne valeur de concentration du liquide 5 en chlorure de sodium, les moyens de gestion 17 actionnent le sélecteur 23 dans sa position « inactive » (figure 1), pour orienter le flux de liquide directement dans le bac de récupération 7 (sans passer par le contenant 21), en vue de son recyclage direct vers le contenant d'aspersion 4.

En revanche, si la valeur de poids correspondante est inférieure au seuil prédéfini, alors la concentration en chlorure de sodium est considérée comme trop faible et les moyens de gestion 17 commandent le sélecteur 23 en position « active » (figure 2) pour faire transiter le flux de liquide 5 par le contenant 21. Le flux de liquide 5 se charge alors en chlorure de sodium complémentaire, à partir du chlorure de sodium sous forme solide 22, ceci par simple contact et dissolution de ce dernier, avant de rejoindre le contenant de récupération 7, en vue de son recyclage.

Lorsque le poids du volume de liquide détecté dans le contenant 12 revient à une valeur considérée comme correcte, les moyens de gestion 17 commandent le pivotement du sélecteur 23 afin de le replacer en position « inactive » (figure 1).

En pratique, la concentration en chlorure de sodium dans le liquide de traitement oscille donc autour de la valeur seuil prédéfinie, ceci sur une plage admissible, notamment fonction de la sensibilité des moyens de détection utilisés.

La valeur seuil correspondante est choisie en fonction de l'application mise en oeuvre (type de produit, température du liquide, matériel utilisé ...) ; elle est paramétrable à volonté.

Le contenant 22 comporte des parois filtrantes, ou des parties de parois filtrantes 22', pour assurer le cloisonnement du chlorure de sodium solide 22, tout en autorisant la sortie du liquide de traitement 5 en direction du contenant de récupération 7.

On peut aussi envisager d'assurer l'entrée du liquide de traitement 5 dans le contenant 22 par le dessous de ce dernier, au moyen d'une paroi de fond filtrante, et d'assurer sa sortie par les côtés, au niveau de parois latérales filtrantes, en particulier pour optimiser la dissolution du NaCl.

Le sélecteur 23 est prévu ici pour fonctionner en tout ou rien. Dans des variantes de réalisation il peut être prévu pour permettre une dérivation simplement d'une partie du flux de liquide 5 vers le contenant de « chargement » 21 ; il peut aussi être prévu du type à multi-positions, pour permettre d'adapter à volonté la proportion du flux général de liquide orienté vers la dérivation 19.

A noter encore que les moyens comparatifs 16 et les moyens de gestion 17 peuvent être regroupés dans un même ensemble (type régulateur électronique ou automate, par exemple).

Dans des variantes de réalisation, on peut aussi envisager la détection d'un autre paramètre que le poids/densité du liquide de traitement 5, représentatif de la concentration en chlorure de sodium (par exemple mesure de la résistivité du fluide ...). Ces moyens de détection de concentration peuvent aussi fonctionner non pas en continu comme décrit ci-dessus, mais à intervalles de temps réguliers.

Bien entendu, il est possible d'utiliser le même principe pour réguler la concentration d'autres substances que le chlorure de sodium dans un liquide de traitement (pour traiter des produits de la mer ou d'autres types de produits), le paramètre représentatif de concentration, et les moyens de détection associés, étant choisis en fonction du liquide servant de véhicule, de la substance de traitement utilisée et de ses propriétés ou caractéristiques physiques. En particulier, on peut aussi envisager de détecter la concentration d'un liquide dans de l'eau. Par exemple, pour le traitement de produits de la mer, ou autres, par de l'éthanol dilué dans de l'eau, il est possible d'utiliser les mêmes moyens de détection par le poids que ceux décrits ci-dessus ; en association, il sera prévu une injection contrôlée d'éthanol dans le circuit de liquide pour réguler la concentration de cette substance.

De tels moyens de régulation automatique de concentration sont simples, peu onéreux au regard des intérêts qu'ils présentent et faciles à mettre en oeuvre. On obtient une régulation automatique de concentration, très fiable, limitant les arrêts intempestifs de production liés aux défaillances humaines et optimisant la qualité des produits traités.

## Revendications

1. Procédé pour contrôler la concentration d'une substance dans un liquide de traitement (5), pour une installation (1) de traitement de produits (3) par ledit liquide (5) circulant en boucle, c'est-à-dire réutilisé après avoir été appliqué auxdits produits (3), et qui s'appauvrit en ladite substance au fur et à mesure de son passage sur lesdits produits (3) **caractérisé en ce qu'**il consiste :
- à détecter automatiquement, en continu ou à intervalles de temps réguliers, la valeur d'un paramètre représentatif de la concentration de ladite substance dans ledit liquide (5),
- à réaliser une comparaison automatique entre ladite valeur détectée et une valeur seuil prédéterminée, et
- dans le cas où ladite valeur détectée est inférieure à ladite valeur seuil, à apporter automatiquement un complément de ladite substance dans ledit liquide (5).

2. Procédé selon la revendication 1, **caractérisé en ce qu'**il consiste, lorsque la concentration de ladite substance dans le liquide (5) est proportionnelle à la densité dudit liquide (5), à détecter le poids d'un volume dudit liquide (5) et à comparer ce poids par rapport à un poids seuil, pour réaliser ou non l'apport complémentaire de ladite substance.

3. Procédé selon la revendication 2, **caractérisé en ce qu'**il consiste à assurer une mise à température déterminée dudit liquide (5), avant d'en détecter le poids d'un volume.

4. Procédé selon l'une quelconque des revendications 2 ou 3, **caractérisé en ce qu'**il consiste à réaliser une dérivation parallèle (13) d'une partie du flux de liquide (5) circulant en boucle, à réaliser éventuellement la mise à température déterminée du liquide (5) passant dans ladite dérivation parallèle (13) et à détecter le poids d'un de ses volumes, sur ladite dérivation parallèle (13), ladite détection étant réalisée par pesée en continu d'un contenant (12) alimenté en continu par ledit liquide (5) et muni d'une évacuation continue (14).

5. Procédé selon l'une quelconque des revendications 1 à 4, **caractérisé en ce que** l'apport complémentaire en substance dans le liquide de traitement (5) s'effectue, en cas de besoin, en faisant transiter au moins une partie du flux de liquide (5) circulant en boucle au travers d'un contenant (21) intégrant ladite substance sous forme solide (22), ledit liquide (5) se chargeant en complément de ladite substance par simple contact et dissolution de celle-ci.

6. installation de traitement de produits (3) par un liquide (5) circulant en boucle et qui contient une substance dont la concentration dans ledit liquide (5) diminue au fur et à mesure de son passage sur lesdits produits (3), pour la mise en oeuvre du procédé selon l'une quelconque des revendications 1 à 5, **caractérisée en ce qu'**elle comprend :
- des moyens (12, 13, 14, 15) pour détecter automatiquement, en continu ou à intervalles de temps réguliers, la valeur d'un paramètre représentatif de la concentration de ladite substance dans ledit liquide de traitement (5),
- des moyens (16) pour réaliser une comparaison automatique entre ladite valeur détectée et une valeur seuil prédéterminée, et
- des moyens (17, 19, 20, 21, 22, 23) agencés pour assurer l'apport automatique d'un complément de ladite substance dans ledit liquide (5), lorsque ladite valeur détectée est inférieure à ladite valeur seuil.

7. Installation selon la revendication 6, **caractérisée en ce qu'**elle comporte un convoyeur sans fin (2), du type ajouré, dont le brin supérieur constitue le plan de transport des produits (3), au-dessus duquel est prévu au moins un dispositif (4) pour asperger sur lesdits produits (3), ledit liquide de traitement (5), et au-dessous duquel est prévu au moins un contenant (7) pour récupérer par gravité ledit liquide de traitement (5) auquel ont été soumis lesdits produits (3) et qui a traversé ledit convoyeur sans fin (2), laquelle installation (1) comporte encore des moyens (8, 9) pour recycler ledit liquide de traitement (5) depuis ledit contenant de récupération (7) vers ledit dispositif d'aspersion (4).

8. Installation selon l'une quelconque des revendications 6 ou 7, **caractérisée en ce que** le paramètre choisi représentatif de la concentration de ladite substance dans ledit liquide de traitement (5) est la densité dudit liquide de traitement (5), ladite installation comportant :
- des moyens (12, 13, 14, 15) pour détecter le poids d'un volume dudit liquide de traitement (5), et
- des moyens (16) pour comparer ce poids par rapport à un poids seuil, pour réaliser ou non l'apport complémentaire de ladite substance.

9. Installation selon la revendication 8, **caractérisée en ce qu'**il comporte des moyens (18) pour mettre à une température déterminée le liquide (5) dont on veut détecter le poids d'un volume.

10. Installation selon l'une quelconque des revendications 8 ou 9, **caractérisée en ce que** les moyens pour détecter le poids d'un volume du liquide de traitement (5) comprennent une dérivation parallèle (13) du circuit en boucle de liquide de traitement (5), sur laquelle dérivation (13) sont ménagés :
- éventuellement des moyens (18) pour chauffer ledit liquide dérivé (5) à une température déterminée,
- des moyens (12, 14, 15) pour peser un volume dudit liquide (5),
- des moyens (16) pour comparer le poids dudit volume de liquide avec une valeur seuil prédéterminée, et
- des moyens (17) pour gérer la mise en oeuvre des moyens (19, 20, 21, 22, 23) assurant l'apport automatique d'un complément de ladite substance dans ledit liquide, en fonction des résultats obtenus par lesdits moyens de comparaison (16).

11. Installation selon la revendication 10, **caractérisée en ce que** les moyens pour peser un volume dudit liquide (5) consistent en un capteur de poids (15) installé sous un contenant (12) alimenté en continu par ledit liquide (5) et muni d'une évacuation continue (14).

12. Installation selon l'une quelconque des revendications 6 à 11, **caractérisée en ce que** les moyens pour assurer l'apport automatique d'un complément de ladite substance dans ledit liquide (5) consistent en une dérivation parallèle (19) du circuit en boucle de liquide (5), laquelle dérivation (19) transite au travers d'un contenant (21) intégrant ladite substance sous forme solide (22), l'entrée de ladite dérivation (19) étant équipée d'un sélecteur (23), manoeuvré par des moyens de gestion (17) utilisant le résultat desdits moyens de comparaison automatique (16), lequel sélecteur (23) peut occuper au moins deux positions :
- une première position dans laquelle il empêche le liquide (5) de passer par ladite dérivation (19), et
- une seconde position dans laquelle il autorise au moins une partie dudit liquide (5) à passer dans ladite dérivation (19).

13. Installation selon la revendication 12, **caractérisée en ce qu'**elle comprend un sélecteur (23) à deux positions, du type tout ou rien, apte à faire transiter ou non la totalité du flux de liquide (5) circulant en boucle par ladite dérivation parallèle (19).

14. Application du procédé selon l'une quelconque des revendications 1 à 5 et/ou de l'installation selon l'une quelconque des revendications 6 à 13 au traitement de produits de la mer type crevettes ou langoustines, par une solution de chlorure de sodium.
